# EUROPEAN PATENT SPECIFICATION

(11) **EP 0 750 169 B1**
(45) Date of publication and mention of the grant of the patent: **09.01.2002**
(21) Application number: 96109151.9
(22) Date of filing: 07.06.1996
(51) Int. Cl.: F27D 3/02, C03B 35/18

(54) **Refractory roller and kiln containing a plurality of rollers**
Feuerfeste Transportrolle und Ofen mit einer Mehrzahl davon
Rouleau réfractaire et four en utilisant un ensemble

(30) Priority: 23.06.1995 IT MI951346
(43) Date of publication of application: 27.12.1996
(73) Proprietor: S.I.T.I. S.p.A. Società Impianti Termoelettrici Industriali, 28040 Marano Ticino (Novara) (IT)
(72) Inventor: Bossetti, Renato, 28100 Novara (IT)
(74) Representative: Forattini, Amelia

(56) References cited:
- DE-A- 2 642 627
- DE-A- 3 627 908
- DE-A- 4 006 497
- DE-B- 1 056 639
- FR-A- 1 155 204
- FR-A- 2 498 164
- US-A- 1 850 617
- US-A- 5 138 766

## Description

The present invention relates to a kiln that contains a plurality of rollers. In particular, the invention relates to a roller and to a kiln that are suitable for baking ceramic materials inside the kiln. More particularly, the kiln contains a platform for conveying the ceramic materials to be baked. The conveyor platform is formed by a plurality of rollers that are motorized from the outside of the kiln. The ceramic materials to be baked are for example ceramic dishes, ceramic tiles, and ceramic refractory bricks. However, the same type of kiln is suitable for baking many other materials. The rollers are generally made of so-called "refractory", so that they can withstand the high temperatures that occur in the kiln. In particular, the temperature is variable along the length of the kiln. In the first so-called preheating section, the temperature is relatively low; in the central baking section it is higher and depends on the type of material to be baked, so that it is normal to reach, for example for tiles, temperatures between 1150 and 1250°C. In the end part of the kiln, the so-called quick cooling section, the temperature of the kiln drops to 600-800°C.

The above is the main field of industrial utilization of the invention, but this field does not constitute a limitation of the invention, since the invention can be used in any other equivalent field, as described in the accompanying claims.

Devices of this type are known and are described for example in Italian industrial invention patent no. 1185164 in the name of the same Applicant. However, these known kilns are not free from drawbacks; in particular, it has been noted that the refractory rollers tend to lose their shape. This deformation, which can be considerable, can be observed in particular in the so-called quick cooling section. This section is in fact particularly delicate, since the tiles, which still have a high temperature between 1150 and 1250°C, enter a space that is at a much lower temperature, between 600 and 800°C. The rollers are therefore cooled by the temperature of the surrounding space and heated by the hot plates that arrive from the baking section. The problem of roller deformation is obviously serious, since the kiln can no longer operate when the rollers are deformed. Accordingly, it has been suggested to replace the refractory rollers with rollers made of silicon carbide. However, the cost of these silicon carbide rollers is approximately ten times higher than the cost of rollers made of simple refractory. Nonetheless, several kilns with rollers entirely made of silicon carbide have already been built. In view of the very large number of rollers present in each kiln, this difference entails an increase in expenditure that heavily affects the overall cost of the kiln.

DE 36 27 908 discloses a Martin-Siemens kiln in which some rings are arranged on hollow rollers to provide the material that is necessary to work the roller straight without weakening the walls of the roller, so that straight rollers can be mounted, manufacturing the kiln.

The aim of the present invention is therefore to solve the above drawbacks with a Kiln according to claim 1 all substantially the same height

The invention will become apparent with reference to the accompanying drawings of an embodiment of the invention, wherein:
Figure 1 is a perspective view of a first embodiment of the roller of the Kiln according to the invention;
Figure 2 is a perspective view of a second embodiment of the roller of the Kiln according to the invention;
Figure 3 is a side view of the roller of Figure 1;
Figure 4 is a side view of the roller of Figure 2;
Figure 5 is a side view of a kiln that includes a plurality of rollers according to the invention;
Figure 6 is a front view of a kiln that includes a plurality of rollers according to the invention; and
Figure 7 is a plan view of a detail of the kiln of Figure 5.
Figure 8 is a plan view of a second embodiment of a roller of a Kiln according to the invention, and
Figure 9 is a side view of the roller of figure 8.

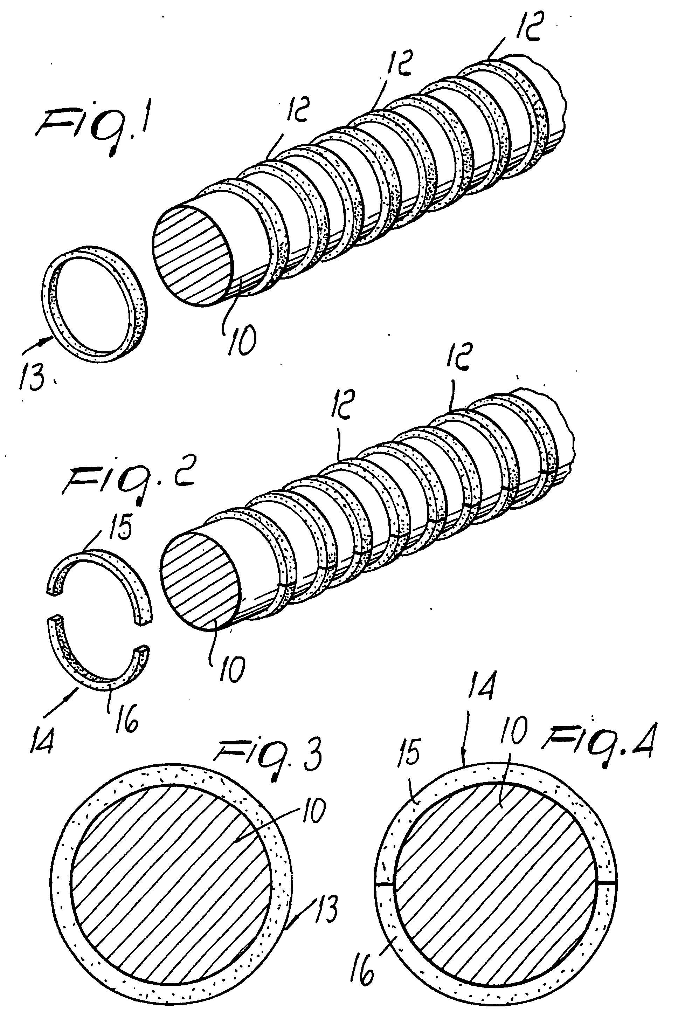

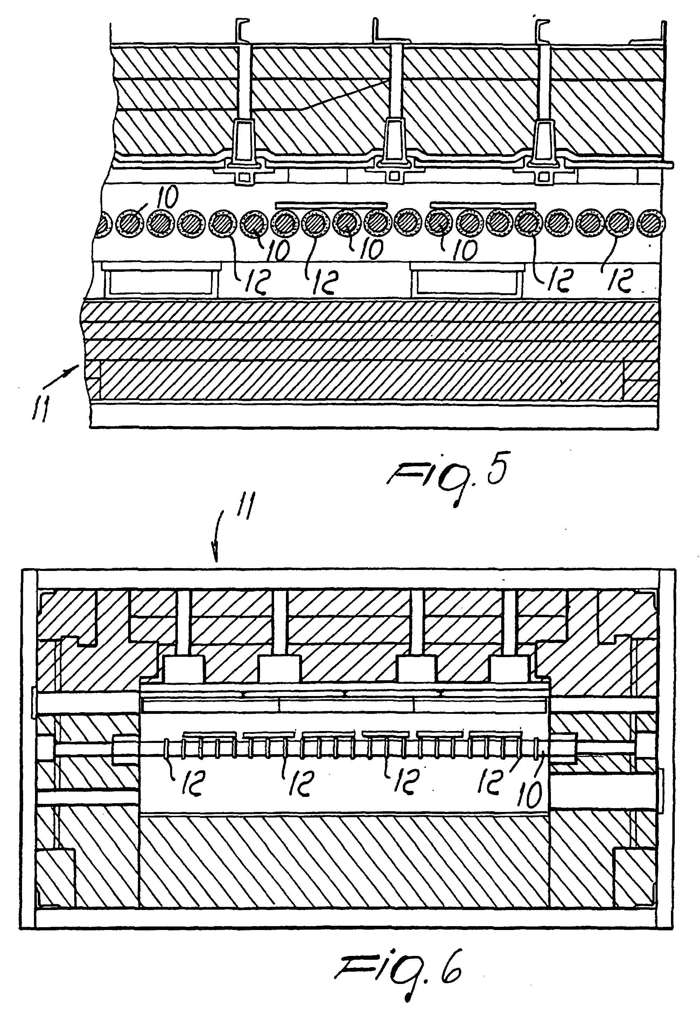

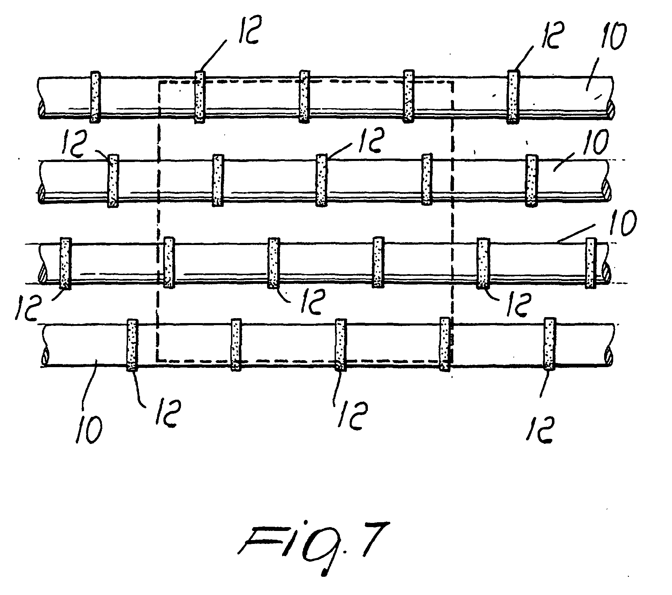

With reference to Figures 1 to 6, the roller 10 is made of ceramic material and is arranged inside a kiln 11. The roller 10 includes a plurality of raised portions 12 that are orientated at right angles to the axis of the roller.

Preferably, the raised portions 12 are formed by rings 13 and 14 that are made of refractory material. The rings 13 and 14 are preferably made to adhere to the surface of the roller 10 by virtue of the interposition of a per se known refractory cement or refractory adhesive.

According to a less preferred embodiment, with particular reference to Figure 2, each ring 14 is formed by two half-rings 15 and 16. This may facilitate the operation for fitting the rings on the roller. However it has been found that monolithic rings are more reliable, more circular and often allow an easier manufacture of the roller.

Preferably, with particular reference to Figure 7, inside the kiln 11 the rollers are arranged so that the raised portions 12 are not mutually aligned. In other words, the raised portions of one roller are offset with respect to the raised portions of another roller.

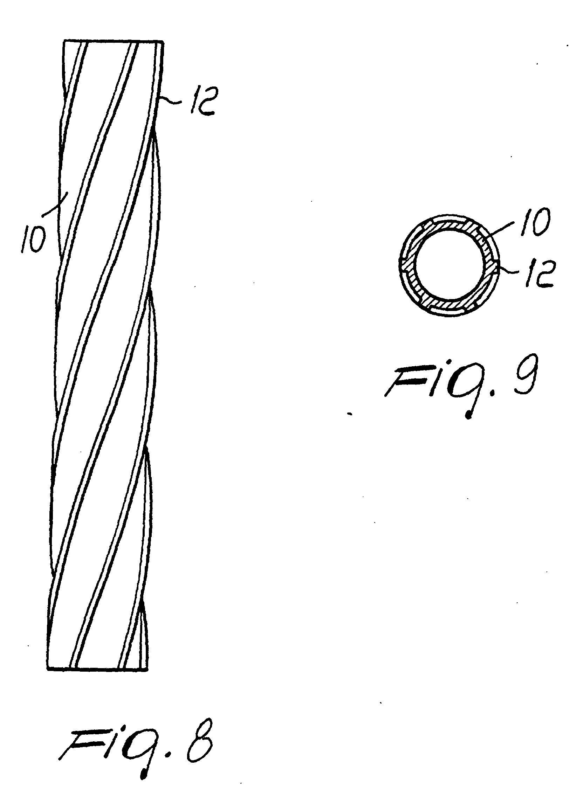

Preferably, with particular reference to figures 8 and 9, the raised portions 12 are formed monolithically with the core of roller 10 and have preferably an elicoidal arrangement. For core of the roller 10 it is meant the central part of the roller which supports the raised portions 12. In this way a particularly important decrease of the expenses can be obtained. In fact, the manufacturing time can be decreased.

Preferably the raised portions 12 are obtainable by extrusion.

In the kiln, the elicoidal arrangement of one of the rollers 10 has a sense opposite with an elicoidal arrangement of a subsequent roller. Accordingly any possible transversal movement of a tile transported by the rollers can be absorbed by the subsequent roller.

Preferably, the rollers 10 provided with rings 12 are arranged in the preheating section of the kiln and in the quick cooling section, since these are the most intensely stressed regions. However, it is of course possible to arrange the same type of roller, according to the invention, throughout the length of the kiln.

During operation, the material to be baked, for example ceramic tiles, as shown in Figures 5, 6, and 7, advances inside the kiln, in contact only with the raised portions 12, without making contact with the lower surface of the roller 10. As regards the rest, operation is perfectly similar to that of existing and per se known kilns with rollers. The invention allows to achieve the following advantages:
the presence of the raised portions 12 allows to avoid deformation of the rollers, even if the rollers are made of plain refractory material. In this manner it is possible to fully avoid the use of silicon carbide for this purpose, reducing the expense for installing the rollers in the kiln to one tenth.

Furthermore, the forming of the raised portions 12 with rings 13 or 14 makes it particularly easy to produce the rollers with raised portions 12, since the rings 13 and 14 can be obtained easily; likewise, fitting on the roller 10 with ceramic cement is also simple.

The execution of the raised portions 12 with rings formed by two half-rings 15 and 16 simplifies the operations for fitting the ring on the roller 10.

The invention is susceptible of numerous modifications and variations; thus, for example, the rollers 12 might be formed in another manner, albeit with constructive complications, instead of with rings glued with cement; in particular, the roller 10 formed monolithically, with the raised portions 12 already included may have a different arrangement.

## Claims

1. Kiln for firing ceramic materials, preferably ceramic tiles, at a temperature not lower than 1150°C, comprising a plurality of rollers (10) made of refractory material, motorized for the conveyance of ceramic materials inside said kiln (11), **characterized in that** some rollers comprise a plurality of raised portions (12), which are raised with respect to a core of each roller (10), and which have all substantially the same height; said some rollers being arranged in the so-called quick cooling section of said kiln, said quick cooling section having a temperature between 600 and 800 °C.

2. Kiln according to claim 1, in which said raised portions (12) are oriented at right angles to the axis of said roller (10).

3. Kiln according to at least one of the preceding claims, **characterized in that** said raised portions (12) are formed by a plurality of rings (13, 14) made of refractory material.

4. Kiln according to at least one of the preceding claims in which, wherein said rings (13, 14) adhere to the surface of said roller by virtue of the interposition of a refractory cement or of a refractory adhesive.

5. Kiln according to at least one of the preceding claims, wherein each one of said rings is formed by two half-rings (15, 16).

6. Kiln according to claim 1, in which said raised portions (12) are formed monolithically with said core of said roller (10) and have preferably an elicoidal arrangement.

7. Kiln according to claim 1 in which said raised portions (12) are obtainable by extrusion.

8. Kiln according to at lest one of the preceding claims, wherein said raised portions (12) of one of said rollers (10) are offset with respect to the raised portions (12) of another one of said rollers (10).

9. Kiln according to claim 6, wherein said elicoidal arrangement of one of said rollers (10) has a sense opposite with an elicoidal arrangement of a subsequent roller.

10. Kiln according to at least one of the preceding claims, wherein said rollers (10) are also arranged in a so-called preheating section of said kiln (11).

## Patentansprüche

1. Ofen zum Brennen von keramischen Materialien, vorzugsweise von keramischen Fliesen, bei Temperaturen von nicht weniger als 1150°C, welcher eine Mehrzahl von Rollen (10) aus feuerfesten Material aufweist, die zur Beförderung der keramischen Materialien innerhalb des Ofens (11) angetrieben werden,
**dadurch gekennzeichnet,**
**daß** einige der Rollen eine Mehrzahl von erhöhten Bereichen (12) aufweisen, welche in Bezug auf den Kern der Rollen (10) erhöht sind und welche alle im wesentlichen die gleiche Höhe aufweisen, wobei diese Rollen in der sogenannten schnell abkühlenden Sektion des Ofens angeordnet sind, wobei die schnell abkühlende Sektion eine Temperatur zwischen 600 und 800°C aufweist.

2. Ofen nach Anspruch 1, **dadurch gekennzeichnet, daß** die erhöhten Bereiche (12) in rechten Winkeln zu der Achse der Rollen (10) ausgerichtet sind.

3. Ofen nach wenigstens einem der vorherigen Ansprüche, **dadurch gekennzeichnet, daß** die erhöhten Bereiche (12) durch eine Mehrzahl von Ringen (13, 14) gebildet werden, die aus einem feuerfesten Material bestehen.

4. Ofen nach wenigstens einem der vorherigen Ansprüche, **dadurch gekennzeichnet, daß** die Ringe (13, 14) an der Oberfläche der Rollen durch die Einfügung eines feuerfesten Zements oder eines feuerfesten Haftmittels haften.

5. Ofen nach wenigstens einem der vorherigen Ansprüche, **dadurch gekennzeichnet, daß** jeder der Ringe durch zwei Halbringe (15, 16) gebildet ist.

6. Ofen nach Anspruch 1, **dadurch gekennzeichnet, daß** die erhöhten Bereiche (12) einstückig mit dem Kern der Rollen (10) ausgebildet sind und vorzugsweise eine elicoidale Anordnung aufweisen.

7. Ofen nach Anspruch 1, **dadurch gekennzeichnet, daß** die erhöhten Bereiche (12) durch Extrudieren erhältlich sind.

8. Ofen nach wenigstens einem der vorherigen Ansprüche, **dadurch gekennzeichnet, daß** die erhöhten Bereiche (12) von einer der Rollen (10) im Verhältnis zu den erhöhten Bereichen (12) einer anderen Rolle (10) versetzt angeordnet sind.

9. Ofen nach Anspruch 6, **dadurch gekennzeichnet, daß** die elicoidale Anordnung von einer Rolle (10) eine entgegengesetzte Richtung als die elicoidale Anordnung einer nachfolgenden Rolle aufweist.

10. Ofen nach wenigstens einem der vorherigen Ansprüche, **dadurch gekennzeichnet, daß** die Rollen (10) auch in der sogenannten vorheizenden Sektion des Ofens angeordnet sind.

## Revendications

1. Four destiné à cuire des matériaux céramiques, de préférence des carreaux de céramique, à une température au moins égale à 1 150 °C, comprenant une pluralité de rouleaux (10) réalisés dans un matériau réfractaire et motorisés afin de transporter des matériaux céramiques à l'intérieur dudit four (11), **caractérisé en ce que** certains rouleaux comprennent une pluralité de portions surélevées (12), qui sont surélevées par rapport à un mandrin de chaque rouleau (10), et qui présentent toutes substantiellement la même hauteur ; lesdits quelques rouleaux étant disposés dans la zone dite de refroidissement rapide dudit four, ladite zone de refroidissement rapide présentant une température comprise entre 600 et 800 °C.

2. Four selon la revendication 1, dans lequel lesdites portions surélevées (12) sont orientées à angle droit par rapport à l'axe dudit rouleau (10).

3. Four selon au moins l'une des revendications précédentes, **caractérisé en ce que** lesdites portions surélevées (12) sont formées par une pluralité d'anneaux (13, 14) réalisés dans un matériau réfractaire.

4. Four selon au moins l'une des revendications précédentes, dans lequel lesdits anneaux (13, 14) adhèrent à la surface dudit rouleau par l'interposition d'un ciment réfractaire ou d'un adhésif réfractaire.

5. Four selon au moins l'une des revendications précédentes, dans lequel chacun desdits anneaux est formé de deux demi-anneaux (15, 16).

6. Four selon la revendication 1, dans lequel lesdites portions surélevées (12) sont formées de façon monolithique avec ledit mandrin dudit rouleau (10) et présentent de préférence une disposition hélicoïdale.

7. Four selon la revendication 1, dans lequel lesdites portions surélevées (12) peuvent être obtenues par extrusion.

8. Four selon au moins l'une des revendications précédentes, dans lequel lesdites portions surélevées (12) d'un desdits rouleaux (10) sont décalées par rapport aux portions surélevées (12) d'un autre des dits rouleaux (10).

9. Four selon la revendication 6, dans lequel ladite disposition hélicoïdale d'un desdits rouleaux (10) a un sens opposé à une disposition hélicoïdale d'un rouleau suivant.

10. Four selon au moins l'une des revendications précédentes, dans lequel lesdits rouleaux (10) sont également disposés dans une zone dite de préchauffage dudit four (11).
